Europäisches Patentamt

European Patent Office

Office européen des brevets

(11) Numéro de publication: **0 290 105 B1**

(19)

(12) FASCICULE DE BREVET EUROPEEN

(45) Date de publication de fascicule du brevet: **12.08.92** (51) Int. Cl.⁵: **B65B 51/30**, B29C 65/02

(21) Numéro de dépôt: **88200888.1**

(22) Date de dépôt: **05.05.88**

(54) **Dispositif pour la fermeture d'enveloppes en matière plastique ou similaires.**

(30) Priorité: **07.05.87 IT 8554287**

(43) Date de publication de la demande:
**09.11.88 Bulletin 88/45**

(45) Mention de la délivrance du brevet:
**12.08.92 Bulletin 92/33**

(84) Etats contractants désignés:
**AT BE CH DE ES FR GB GR IT LI LU NL SE**

(56) Documents cités:
**DE-A- 3 338 105**
**FR-A- 2 347 263**

(73) Titulaire: **P.F.M. S.p.A.**
**Via Pasubio, 49**
**I-36036 Torrebelvicino (Vicenza)(IT)**

(72) Inventeur: **Fioravanti, Pietro**
**Via Grumi dei Frati**
**I-36015 Schio (Vicenza)(IT)**

(74) Mandataire: **Bettello, Luigi, Dott. Ing.**
**Via Col d'Echele, 25**
**I-36100 Vicenza(IT)**

## Description

La présente invention a pour objet un dispositif pour la fermeture des enveloppes en matière plastique ou similaires selon la première partie de la revendication 1. Ce dispositiv est, destiné à être utilisé sur des machines qui travaillent à l'horizontale en continu.

Un tel dispositif est connu du document DE-A-3 338 105.

Les dispositifs de ce genre qui sont connus comprennent généralement deux arbres superposés disposés suivant des axes parallèles et entraînés en rotation dans des sens contraires, chacun desdits arbres portant au moins une platine propre à effectuer la fermeture des bords transversaux d'une enveloppe en matière plastique, en carton plastifié ou analogue. Le plus souvent l'une des deux platines comporte un couteau destiné à assurer la coupe de la matière en ruban qui enroulée autour du produit constitue les enveloppes, afin de séparer celles-ci les unes des autres. Dans le cas où la matière d'enveloppement est du type soudable à chaud (par exemple du polyéthylène), on prévoit de disposer à l'intérieur des platines une ou plusieurs résistances électriques qui lorsqu'elles sont parcourues par le courant, opèrent le chauffage de la surface de travail desdites platines.

L'inconvénient principal de ces dispositifs réside dans le fait que les deux platines restent en contact sur une portion angulaire très limitée ; en conséquence, pour obtenir une qualité acceptable de la soudure, il est nécessaire de réduire la vitesse de rotation des platines afin d'augmenter le temps de contact mutuel de celles-ci, ce qui implique évidemment une réduction de la productivité de la machine opératrice.

Pour remédier à cet inconvénient on a proposé un dispositif dans lequel les platines accomplissent, non pas un parcours circulaire autour de l'axe de l'arbre qui les met en rotation, mais bien un parcours rectiligne au cours de la phase de travail, ledit parcours restant circulaire au cours de la phase dans laquelle les platines ne sont pas en contact mutuel. Ceci est obtenu en prévoyant un ou deux galets montés à l'extrémité des barres-supports des platines, lesquels galets parcourent une piste en forme de came, avec un rayon variable par rapport à l'axe de l'arbre qui met en rotation la platine.

Avec une telle réalisation structurelle, il est évident que la distance comprise entre la face de travail de la platine et l'axe de l'arbre sus-mentionné est variable et, plus particulièrement, est minimal au niveau de la portion rectiligne où se déroule effectivement l'action de fermeture des platines ; pour permettre cette variation de rayon il est prévu un moyen de liaison spécial entre les platines et les arbres qui les animent. Par ailleurs la présence des galets sus-indiqués, indispensable pour éviter que les platines et donc la barre soient animés de mouvements incongrus durant la phase linéaire du déplacement, pose une limite bien précise à la valeur de la pression de soudage susceptible d'être appliquée aux platines. En outre la présence des deux arbres parallèles, bien entendu disposés transversalement à la direction d'avance des produits, pose une limite bien nette à l'épaisseur des enveloppes sur lesquelles on désire opérer.

Au surplus, ce dispositif présente des inconvénients considérables dans le cas où il est utilisé pour la fermeture à chaud d'enveloppes en matière plastique ; en pareil cas il est nécessaire de prévoir aussi bien des câbles de liaison électrique pour alimenter en courant les résistances montées à l'intérieur des platines, que des câbles pour assurer la liaison des sondes destinées au relevé de la température des platines, avec la centrale qui contrôle cette température. Dans un tel dispositif, les câbles sont supportés au niveau des arbres qui assurent la rotation des platines, eux-mêmes portés par une partie fixe de la machine. Il est évident que les conducteurs de liaison prévus entre la platine et l'arbre subissent des sollicitations considérables dues au fait que la distance comprise entre la platine et l'axe de l'arbre n'est pas constante. Ceci implique que ces conducteurs ne peuvent être réalisés en cuivre pour ce qui concerne l'amenée du courant, ou en une matière à bas coefficient de température (typiquement manganèse et fer à résistivité constante) pour ce qui est des conducteurs associés aux sondes, du fait que ces matières ne sont pas en mesure de résister longtemps à de telles sollicitations. L'âme de ces câbles doit en conséquence être généralement réalisée en acier harmonique, qui présente des caractéristiques optimales du point de vue mécanique, mais qui comporte une résistivité supérieure à celle du cuivre et surtout un coefficient élevé de température, ce qui provoque des imprécisions notables en ce qui concerne le relevé des températures à l'aide des sondes prévues à cet effet.

La présente invention se propose de réaliser un dispositif dans lequel les platines comportent bien un mouvement rectiligne et non curviligne au niveau de leurs zones de travail, mais qui soit en mesure de remédier aux inconvénients ci-dessus signalés.

Le dispositif suivant l'invention est défini à la revendication 1.

En fait l'invention prévoit que la barre-support pour chacune des deux platines est logée, au niveau de ses deux extrémités, dans une piste ou came qui présente une portion rectiligne pour ce qui est de la zone de travail, ainsi qu'une portion à profil circulaire ; la caractéristique fondamentale de l'invention est de prévoir qu'au niveau d'une zone proche de leurs extrémités, les barres sus-indiquées sont logées à l'intérieur d'une boutonnière ménagée dans une bielle, laquelle est mise en rotation par un moyen approprié. De cette façon la barre, et donc la platine dont elle est solidaire, sont contraintes de suivre le mouvement de la bielle en parcourant ainsi la piste ou came précitée. Pour éviter que la barre et en conséquence la platine n'accomplissent des mouvements incongrus dans la zone dans laquelle le mouvement de cette barre est rectiligne, il est prévu que ladite barre est rendue solidaire de deux bras disposés perpendiculairement à celle-ci, lesquels bras sont articulés, au niveau de leur extrémité opposée, à un chariot qui se déplace sur une tige de guidage orientée horizontalement ; ce chariot accomplit un mouvement alternatif le long de la tige, en correspondance avec les mouvements de la platine le long de la piste ou came.

De ce fait les deux bielles ne sont réunies à aucun arbre ou moyen transversal d'accouplement, la liaison cinématique étant assurée par des moyens prévus à l'extérieur de la zone de travail ; dans ce type de réalisation il est possible, pour des dimensions et forme de cames et de platines identiques, de travailler sur des enveloppes d'épaisseur beaucoup plus grande que dans le cas du dispositif cité plus haut. En outre, on peut augmenter de manière considérable la pression de soudage exercée par les platines au niveau des bords transversaux de chaque enveloppe, étant donné que les galets faisant fonction d'éléments stabilisateurs pour les platines au niveau de la portion rectiligne sont supprimés.

Au surplus, par suite de la présence des tiges de guidage, on est à même de disposer les câbles pour l'alimentation électrique des résistances incorporées aux platines, ainsi que ceux pour la liaison des sondes prévues dans lesdites platines, à l'intérieur de gaines portées par lesdites tiges, ce qui permet d'éviter toute sollicitation propre à fatiguer ces câbles.

Les caractéristiques de l'invention qui précèdent, ainsi que d'autres encore, vont être décrites en détail dans la description qui suit, en référence aux planches de dessin annexées, dans lesquelles :

La fig. 1 est une vue de côté schématique du dispositif suivant l'invention, les platines étant en position de travail.

La fig. 2 est la même vue avec les platines représentées à différentes positions de la piste ou came.

La fig. 3 est une vue détail avec coupe transversale du dispositif suivant l'invention.

La fig. 4 est une vue en élévation détaillée, également avec coupe transversale, du même dispositif.

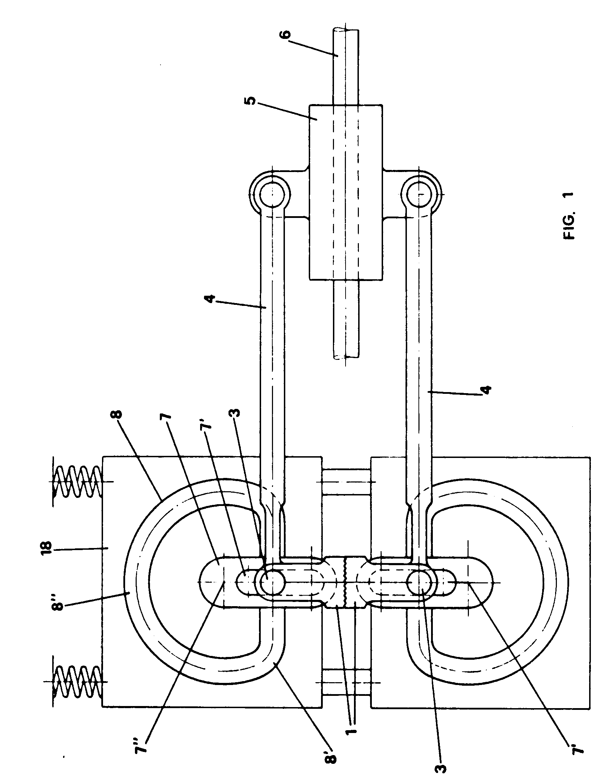

En fig. 1 on voit que le dispositif comprend essentiellement deux platines opposées 1 dont chacune est portée par une barre-support 3 qui à proximité de ses deux extrémités est engagée à l'intérieur d'une boutonnière 7' ménagée longitudinalement dans une bielle 7 ; les extrémités des barres sont introduites dans une piste ou came 8 pratiquée dans la face d'un support 18 qui est tournée en direction de la zone de travail. Cette piste ou came comporte une portion rectiligne 8' disposée au niveau de la zone de travail, ainsi qu'une portion 8" à profil en arc de cercle.

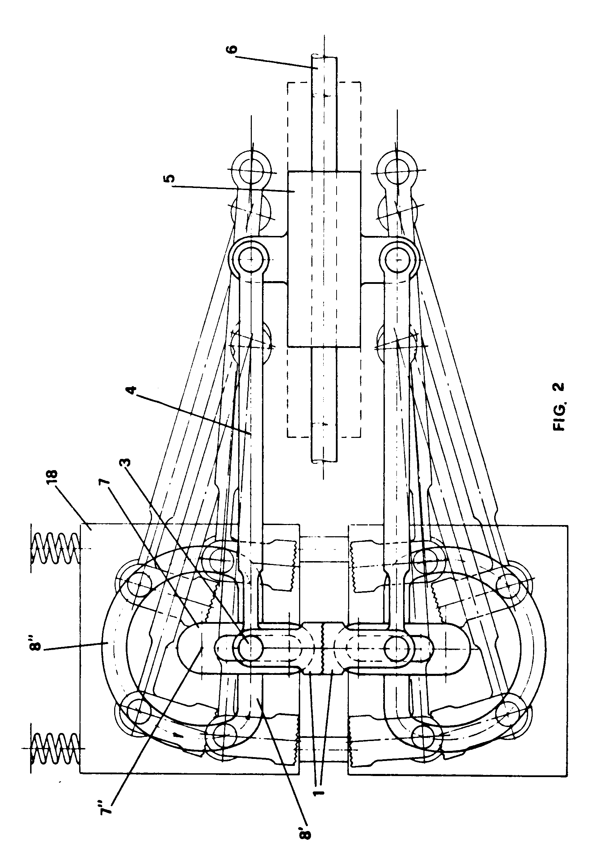

Du fait que les bielles 7 sont mises en rotation autour de l'axe transversal 7" à l'aide de moyens appropriés, on conçoit que la barre-support 3 et en conséquence les platines 1 sont contraintes de suivre le parcours déterminé par la piste ou came 8, des moyens de roulement appropriés étant prévus au niveau des extrémités de ladite barre 3 ; la présence de la boutonnière 7' permet la variation du rayon assumé par l'axe de cette barre 3 par rapport à l'axe de rotation 7" par suite de l'excentricité de la piste ou came 8. En fig. 2 on voit à ce sujet une série de positions assumées par les platines au cours de la rotation de la bielle 7 ; on comprend que ces platines doivent tourner en synchronisme et dans des sens opposés. Les sens de rotation indiqués sur le dessin sont donnés à simple titre d'exemple et pourraient être inversés sans problème aucun.

La course utile des platines est celle déterminée par la portion rectiligne 8', au niveau de laquelle elles restent en contact, tout d'abord suivant une partie limitée de leurs faces opposées, puis sur la surface totale de celles-ci, et enfin sur une partie de ces faces toujours plus petite jusqu'à leur séparation mutuelle, en assurant de la sorte la fermeture et éventuellement la coupe des bords transversaux des enveloppes.

Pour éviter que les platines comportent des mouvements incongrus en correspondance avec la portion rectiligne 8', on prévoit que chacune desdites platines est rendue solidaire, toujours au niveau de ses deux extrémités, de deux bras 4 dont les axes sont orientés perpendiculairement au plan transversal de symétrie des platines, lesdits bras étant attelés par leur extrémité opposée à un chariot 5 qui se déplace sur la tige horizontale de guidage 6 lors des mouvements déterminés sur l'ensemble par les bielles 7.

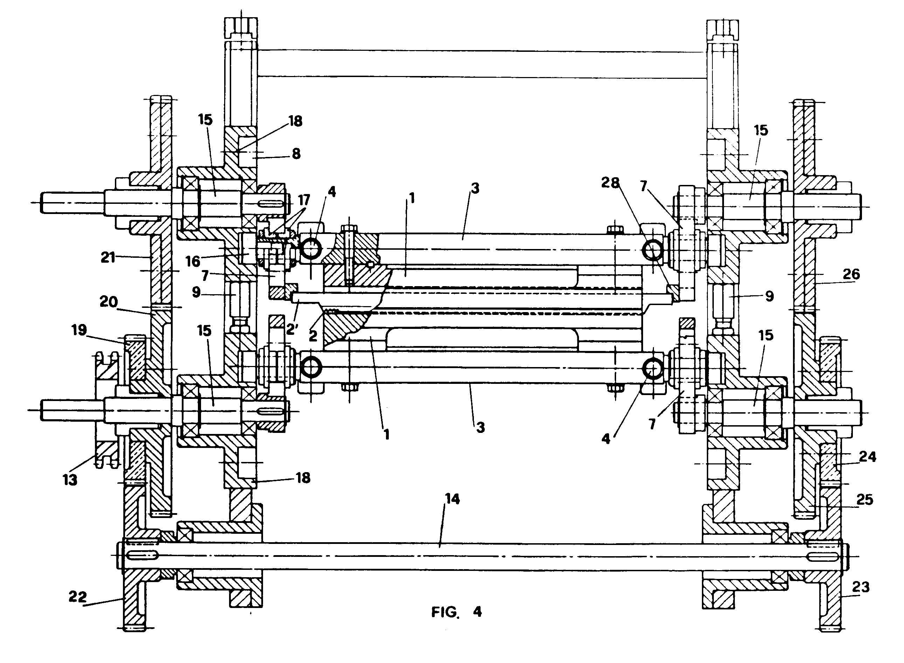

En fig. 4 on voit que les parties terminales des barres 3 présentent des dimensions transversales inférieures à celles de la partie centrale ; autour de ces parties terminales sont placés des coussinets à rouleaux 16 qui constituent les organes qui tournent à l'intérieur des pistes 8. Autour des barres 3 et immédiatement en avant de leurs zones d'extrémités, sont prévus deux paliers 17, indispensables pour permettre le mouvement de la barre à l'intérieur de la boutonnière de la bielle 7.

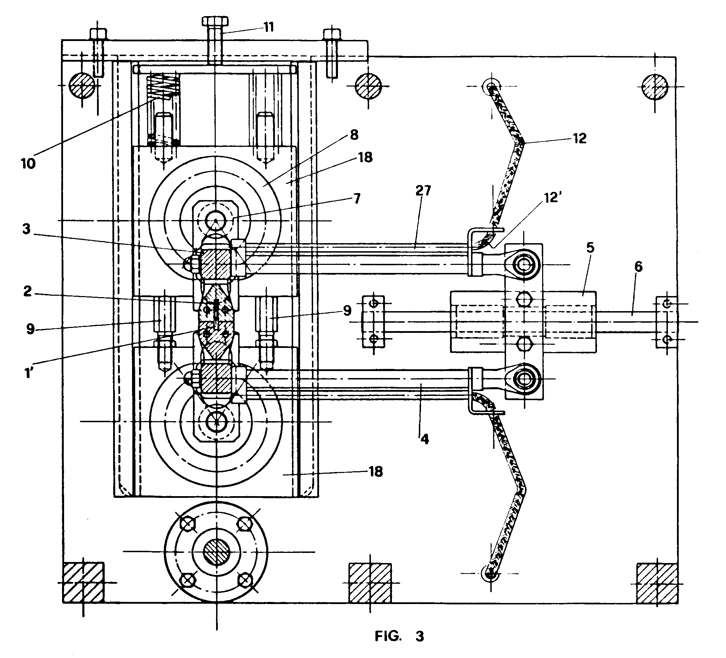

En fig. 3 on note que le dispositif est muni de moyens élastiques 10 qui repoussent le support supérieur 18 vers le bas, lesdits moyens étant propres à déterminer un effort de pression de la platine supérieure sur la platine inférieure, lequel effort est réglable par action sur la vis 11. Les deux supports 18 d'un même flasque sont reliés par des écarteurs 9 interposés entre ceux-ci et aptes à permettre également de régler l'écartement entre les platines.

Conformément à une forme de réalisation particulière de l'invention, tout l'ensemble tire son mouvement d'un moteur, non représenté sur le dessin, relié par une chaîne, une courroie ou autre à une roue dentée 13 calée sur l'un des arbres 15 pour mettre en rotation l'une des bielles 7 prévues sur l'un des flasques du dispositif. La rotation de cet arbre provoque celle des roues dentées 19 et 20 ; ces dernières déterminent, par la roue dentée 21, le mouvement de l'arbre 15 qui met en rotation l'autre bielle 7 prévu contre le même flasque. La roue dentée 19 est reliée à la roue dentée 22 calée sur l'arbre 14 qui, orienté transversalement, transmet le mouvement sur l'autre flasque du dispositif. Sur l'extrémité opposée de cet arbre est en effet calée une autre roue dentée 23 qui par la roue dentée 24 assure l'entraînement en rotation de l'arbre 15 de la bielle disposée au-dessous sur ce flasque et qui par les roues dentées 15 et 26 détermine la rotation de l'arbre 15 qui déplace l'autre bielle 7 du flasque envisagé.

Etant donné la liaison réalisée par coopération de roues dentées et grâce au fait que les roues dentées correspondant aux deux flasques sont identiques, et par suite encore du fait que les roues dentées 20 et 21 (ainsi que 25 et 26) présentent des nombres de dents identiques, on obtient le résultat que les bielles d'un même flasque tournent en synchronisme de manière opposée, tandis que les bielles placées au niveau de la même platine tournent en synchronisme, mais dans le même sens.

En fig. 3 on voit que dans le cas où le dispositif est utilisé pour la fermeture à chaud, les câbles d'alimentation des résistances, ainsi que ceux pour la transmission du signal électrique provenant de la sonde incorporée aux platines, sont avantageusement logés à l'intérieur d'une gaine 27 portée par le bras 4 qui à son tour est rendu solidaire de la barre 3. On comprend donc qu'avec un tel système structurel les câbles 12 et en particulier leur boucle 12', sont soumis à une sollicitation provenant uniquement du mouvement du bras 4, alors que dans les dispositifs connus, ces câbles, disposés entre les platines et l'arbre qui met celles-ci en rotation, sont soumis à des sollicitations considérables par suite des mouvements des platines.

Le dispositif suivant l'invention est susceptible d'être rendu apte à effectuer l'opération de coupe au niveau des bords d'extrémité transversaux de deux enveloppes successives. En pareil cas le couteau sera logé à l'intérieur d'une cavité appropriée ménagée dans la face de travail de l'une des platines 1, la platine opposée comportant une autre cavité 1' pour permettre à la lame du couteau de s'enfoncer dans ladite platine lorsque la coupe est opérée. Le couteau sus-mentionné sera fixé, à la façon en soi connue, contre le fond de la cavité qui le renferme, à l'aide de moyens élastiques qui tendent à le rappeler vers l'intérieur de celle-ci.

Afin de déterminer l'action de coupe de la part du couteau 2 au moment où les platines sont en contact, la présente invention prévoit que le couteau sort latéralement de la cavité dans laquelle il est logé par le moyen de deux prolongements 2', deux dés 28 étant fixés sur l'extrémité des bielles 7 tournées du côté de la platine dans laquelle ledit couteau est logé ; du fait que la bielle 7 tourne en suivant une trajectoire rigoureusement circulaire autour de l'axe de l'arbre 15 tandis que les platines 1 suivent une trajectoire excentrique, les prolongements 2' du couteau viennent interférer avec les dés 28, en provoquant de la sorte la sortie dudit couteau de la cavité dans laquelle il est logé et en opérant ainsi la coupe de l'enveloppe.

## Revendications

1. Dispositif pour la fermeture d'enveloppes en matière plastique ou similaires, du genre comprenant deux platines (1) à axes parallèles qui en tournant dans des sens opposés de manière synchrone sont destinées à accomplir une trajectoire excentrique par suite de la présence, sur les deux flasques du dispositif et au niveau des deux platines, d'une piste ou came (8) à l'intérieur de laquelle se déplacent des parties reliées auxdites platines, laquelle piste ou came comporte une portion rectiligne dont les deux extrémités se raccordent à une portion en forme de partie de circonférence, chacune des deux platines étant solidaire d'une barre-support (3) déplacée par deux bielles (7) dans lesquelles sont logées les parties proches des extrémités de ladite barre, les extrémités des barres (3) étant disposées à l'intérieur des pistes ou cames (8), les bielles (7) étant déplacées de manière à tourner de manière synchrone, les bielles de chacune des paires placées au niveau de chacune des platines tournant dans le sens opposé à celui de l'autre paire, caractérisé par le fait que les bielles sont pourvues de boutonnières (7') dans lesquelles sont logées les parties proches des extrémités des barres et que chacune des barres est solidaire de deux bras (4) orientés suivant un axe perpendiculaire au plan transversal médian des platines, lesquels bras sont attelés à un chariot (5) qui se déplace sur une tige de guidage (6) disposée horizontalement.

2. Dispositif suivant la revendication 1, caractérisé par le fait qu'au niveau des barres (3) sont prévus des moyens de roulement (16) propres à se déplacer dans la piste ou came (8).

3. Dispositif suivant la revendication 1, caractérisé par le fait qu'autour des parties des barres (3) qui sont disposées à l'intérieur des boutonnière (7') des bielles (7) sont prévus deux organes de glissement (17).

4. Dispositif suivant la revendication 1, caractérisé en ce que le mouvement de tout l'ensemble est fourni par un moteur relié à une roue dentée (13) calée sur l'arbre (15) qui met en rotation l'une des bielles, sur ledit arbre étant calées deux autres roues dentées (19, 20), cette dernière mettant en rotation une autre roue dentée (21) de diamètre identique, calée sur l'arbre (15) qui entraîne la bielle (7) disposée au-dessus de la précédente, la roue dentée (19) mettant en rotation, par l'intermédiaire d'une autre roue dentée (22), un arbre (14) orienté transversalement en dehors de la zone de travail, lequel arbre assure par l'intermédiaire d'une chaîne cinématique de roues dentées (23, 24, 25, 26) égales et identiquement disposées par rapport aux roues dentées prévues au niveau de l'autre flasque du dispositif, la mise en rotation des arbres (15) et en conséquence des bielles (7) qui sont montées sur ce dernier flasque.

5. Dispositif suivant la revendication 1, pour la fermeture à chaud des enveloppes, caractérisé par le fait qu'il présente, au niveau de chacun des bras (4), une gaine (27) apte à renfermer les câbles (12) d'alimentation électrique des résistances prévues à l'intérieur des platines (1), ainsi que ceux provenant des sondes incorporées auxdites platines.

6. Dispositif suivant la revendication 1, apte à assurer également la coupe des bords transversaux des enveloppes, du genre comprenant un couteau (2) logé dans une cavité appropriée qui s'étend sur toute la longueur de l'une des platines et qui est fixé au fond de ladite cavité par des moyens élastiques qui tendent à le rappeler dans ladite cavité, tandis que la platine opposée à celle qui loge ledit couteau est creusée d'une cavité (1') placée en vis-à-vis de celle sus-mentionnée, caractérisé par le fait que le couteau (2) comporte deux prolongements (2') qui s'étendent latéralement en dehors de la platine (1) tandis que sur la bielle (7) correspondant à la platine qui porte le couteau est prévu un dé (28) dimensionné de façon à venir au contact (2') de ce couteau, en repoussant celui-ci vers le bas lorsque la platine (1) est animée d'un mouvement rectiligne.

## Claims

1. Device for sealing plastic envelopes or similar, wherein two plates (1) with parallel axes which rotate synchronously in opposite directions are designed to execute an eccentric trajectory as a result of the provision, on the two end plates of the device and level with the two plates (1), of a track or cam (8) inside which move parts connected to said plates (1), said track or cam having a rectilinear portion of which the two extremities are linked to a part-circumference shaped portion, each of the two plates (1) being integral with a support bar (3) moved by two connecting rods (7) in which the nearest parts of the ends of said bar are housed, the ends of the bars (3) being disposed inside the tracks or cams (8), the connecting rods (7) being moved so as to rotate synchronously, and the connecting rods of each of the pairs positioned level with each of the plates (1) rotating in the opposite direction to that of the other pair, characterised in that the connecting rods are provided with oblong openings (7,) in which the nearest parts of the ends of the bars are housed and that each of the bars is integral with two arms (4) aligned with an axis perpendicular to the median transversal plane of the plates (1), said arms being coupled to a slide (5) which moves along a horizontally disposed guide rod (6).

2. Device according to claim 1, characterised in that level with the bars (3) are provided rolling means (16) adapted to move in the track or cam (8).

3. Device according to claim 1, characterised in that around those parts of the bars (3) disposed inside the oblong openings (7') of the connecting rods (7) are provided two sliding members (17).

4. Device according to claim 1, characterised in that the movement of the entire assembly is provided by a motor connected to a toothed wheel (13) set on the shaft (15) which sets one of the connecting rods in rotation, there being set on said shaft two further toothed wheels (19, 20), the latter one setting in rotation a further toothed wheel (21) of identical diameter, set on the shaft (15) which drives the connecting rod (7) disposed above the preceding one, the toothed wheel (19) setting in rotation, by means of a further toothed wheel (22), a shaft (14) transversely aligned outside the operating area, said shaft ensuring, by means of a kinematic chain of congruent toothed wheels (23, 24, 25, 26) identically disposed in relation to the toothed wheels provided level with the other end plate of the device, the rotation of the shafts (15) and consequently of the connecting rods (7) mounted on the latter end plate.

5. Device according to claim 1, for heat-sealing envelopes, characterised in that level with each of the arms (4) it exhibits a sheath (27) adapted to enclose the electrical cables (12) supplying the resistors provided inside the plates (1), as well as those coming from the sensors incorporated in said plates.

6. Device according to claim 1, adapted to likewise carry out cutting of the transverse edges of the envelopes, wherein a knife (2) housed in a suitable cavity which extends the full length of one of the plates (1) and which is fixed at the base of said cavity by elastic means which try to draw it back into said cavity, while the plate (1) opposite the one housing said knife is hollowed out by a cavity (1') positioned opposite the aforementioned one, characterised in that the knife (2) has two extension pieces (2') which extend laterally outside the plate (1) whilst on the connecting rod (7) corresponding to the plate carrying the knife is a die (28) of dimensions allowing it to come into contact (2') with said knife, forcing the latter downwards again when the plate (1) is actuated by rectilinear motion.

**Patentansprüche**

1. Vorrichtung zum Verschließen von Plastikumschlägen oder dergleichen, mit zwei achsparallelen Platten (1), welche sich durch synchrone Drehbewegung in entgegengesetzten Richtungen und mittels zweier Arme sowie einer in Höhe der beiden Platten liegenden Bahn oder eines Nockens, in welcher sich mit den beiden Platten verbundene Teile bewegen, in einer exzentrischen Bahn bewegen, wobei die Bahn oder der Nocken einen geradlinigen Teil aufweisen, dessen beiden äußeren Enden in einen die Form eines Kreisbogens aufweisenden Teil übergehen und eine jede der beiden Platten an einem Stangenträger (3) befestigt ist, der von zwei Pleuelstangen (7) bewegt wird, in welchen die nahe der äußeren Enden des Stangenträgers liegenden Teile angeordnet sind und die äußeren Enden der Stangenträger (3) im Inneren der Bahn oder Nocken (8) liegen, wobei die Pleuelstangen (7) so bewegt werden, daß sie sich synchron drehen und die Pleuelstangen (7) eines jeden in Höhe einer jeden Platte liegenden Paares sich in entgegengesetzter Richtung zu dem anderen Paar drehen, dadurch gekennzeichnet, daß die Pleuelstangen (7) mit länglichen Aussparungen (7') versehen sind, in welchen die nahe der äußeren Teile der Stangen liegenden Teile angeordnet sind, daß eine jede der Stangen mit zwei Armen (4) verbunden ist, welche senkrecht zu der in Querrichtung liegenden Mittelebene der Platten stehen und daß diese Arme (4) an einem Schlitten (5) angeordnet sind, welcher sich längs einer waagerechten Führungsstange (6) bewegt.

2. Vorrichtung nach Anspruch 1, dadurch gekennzeichnet, daß in Höhe der Stangen (3) in der Bahn oder dem Nocken (8) bewegbare Rollen (16) vorgesehen sind.

3. Vorrichtung nach Anspruch 1, dadurch gekennzeichnet, daß um diejenigen Teile der Stangen (3) herum, welche im Inneren der länglichen Aussparungen (7') der Pleuelstangen (7) liegen, zwei Gleitorgane (17) vorgesehen sind.

4. Vorrichtung nach Anspruch 1, dadurch gekennzeichnet, daß die Bewegung der Gesamtanordnung mittels eines Antriebsmotors erfolgt, welcher mit einer auf einer Achse (13) aufgekeilten Welle (15) verbunden ist, welche die eine der Pleuelstangen in Drehbewegung versetzt, daß auf dieser Welle (15) zwei weitere Zahnräder (19, 20) aufgekeilt sind, welch letzteres ein weiteres Zahnrad (21) gleichen Durchmessers in Drehbewegung versetzt, wobei dieses Zahnrad (21) auf derjenigen Welle (15) aufgekeilt ist, welche die oberhalb der vorhergehenden Pleuelstange (7) liegende Pleuelstange (7) bewegt, daß das Zahnrad (19) über ein weiteres Zahnrad (22) eine Welle (14) antreibt, welche in Querrichtung außerhalb des Arbeitsbereiches orientiert ist und daß diese Welle unter Zwischenschaltung einer kinematischen Kette, bestehend aus gleichen und relativ zu den Zahnrädern auf gleicher Höhe des anderen Armes der Vorrichtung identisch angeordneten Zahnrädern, die Welle (15) und infolgedessen auch die Pleuelstangen (7) in Drehbewegung versetzt, welche auf dem letzten Arm angeordnet sind.

5. Vorrichtung nach Anspruch 1 zum Warmverschluß der Plastikumschläge, dadurch gekennzeichnet, daß in Höhe eines jeden Armes (4) eine Umhüllung (27) vorgesehen ist, welche die elektrischen Leitungen (12) der im Inneren der Platten angeordneten Heizwiderstände sowie die Leitungen der in diesen Platten liegenden Sonden aufnimmt.

6. Vorrichtung nach Anspruch 1, welche auch das Schneiden der Querränder der Plastikumschläge ermöglicht, mit einem Schneidmesser (2), welches in einer sich über die gesamte Länge einer der beiden Platten erstreckenden Aussparung liegt und mit dem Bodenbereich derselben über elastische Mittel verbunden ist, welche es in diese Aussparung hineindrücken, während diejenige Platte, welche der das Schneidmesser aufnehmenden Platte gegenüberliegt, eine Aussparung (1') aufweist, welche gegenüber der vorerwähnten Aussparung liegt, dadurch gekennzeichnet, daß das Schneidmesser (2) zwei Verlängerungen (2') aufweist, welche in seitlicher Richtung aus der Platte (1) herausgeführt sind, während auf derjenigen Pleuelstange (7), welche der das Schneidmesser tragenden Platte entspricht, ein Würfel (28) angeordnet ist, der so bemessen ist, daß er mit diesem Schneidmesser in der Weise in Berührung gelangt, indem er es nach unten bewegt, wenn die Platte (1) eine geradlinige Bewegung vollführt.

FIG. 1

FIG. 2

FIG. 3

FIG. 4

EP 0 290 105 B1